# EUROPÄISCHE PATENTSCHRIFT

(11) **EP 1 256 379 B1**
(45) Veröffentlichungstag und Bekanntmachung des Hinweises auf die Patenterteilung: **07.06.2017**
(21) Anmeldenummer: 02009784.6
(22) Anmeldetag: 30.04.2002
(51) Int. Cl.: B01J 19/32

(54) **GEORDNETE STOFFAUSTAUSCHPACKUNG MIT RANDABWEISERN**
STRUCTURED PACKING FOR MASS TRANSFER WITH FLOW RESTRICTING MEANS
GARNISSAGE STRUCTURÉ POUR TRANSFERT DE MATIÉRE AVEC DES ÉLEMENTS POUR RÉDUIRE L'ÉCOULEMENT LE LONG DE LA PAROI

(30) Priorität: 08.05.2001 DE 10122189
(43) Veröffentlichungstag der Anmeldung: 13.11.2002
(73) Patentinhaber: De Dietrich Process Systems GmbH, 55122 Mainz (DE)
(72) Erfinder: Dichtl, Gottfried, 55268 Nieder-Olm (DE); Dietl, Steffen, 55546 Hackenheim (DE)
(74) Vertreter: Friese Goeden Patentanwälte PartGmbB

(56) Entgegenhaltungen:
- EP-A- 0 867 220
- EP-A- 0 997 189
- US-A- 5 224 351
- PATENT ABSTRACTS OF JAPAN vol. 1999, no. 09, 30. Juli 1999 (1999-07-30) -& JP 11 099329 A (DAIDO HOXAN INC), 13. April 1999 (1999-04-13)

## Beschreibung

Die Erfindung betrifft eine geordnete Stoffaustauschpackung mit neuartigen Randabweisern.

Es ist bekannt, in Kolonnen, in denen Stoffaustauschvorgänge ablaufen, d.h. insbesondere in Absorptions-, Desorptions-, Rektifikations- oder Extraktionskolonnen, sog. geordnete Packungen einzusetzen, die aus abschnittsweise übereinander in der Kolonne angeordneten Packungselementen bestehen, die entweder als einzelne dem Kolonnenquerschnitt angepaßte Packungselemente den Kolonnenquerschnitt im wesentlichen füllen oder die, insbesondere bei größeren lichten Weiten der Kolonnen, ihrerseits aus einzelnen Segmenten aufgebaut sind, die beispielsweise tortenstückartig zu einem zusammengesetzten Packungselement kombiniert sind.

Geordnete Stoffaustauschpackungen existieren in verschiedenen Ausgestaltungen und können aus verschiedenen Materialien bestehen. Eine bevorzugte Art von geordneten Stoffaustauschpackungen sind solche aus Glas, beispielsweise solche, die durch Verbinden von Glaswellplatten hergestellt werden, wie in der DE 39 09 995 C1 und der DE 41 28 675 C2 beschrieben ist. Derartig geordnete Stoffaustauschpackungen werden unter der Marke DURAPACK^{®} vertrieben und im Hinblick auf ihren Aufbau und ihre Verwendung in den Prospekten für derartige DURAPACK^{®}-Packungen noch näher erläutert.

Die vorliegende Erfindung ist jedoch nicht auf eine Verwendung mit derartigen Glas-Stoffaustauschpackungen beschränkt, sondern kann auch in Verbindung mit anderen geordneten Stoffaustauschpackungen aus anderen Materialien verwendet werden, beispielsweise solchen, wie sie in der Einleitung des Patents DE 41 28 675 C2 erwähnt werden.

Die Packungselemente derartiger geordneter Stoffaustauschpackungen werden abschnittsweise übereinander im Kolonnenquerschnitt angeordnet, wobei zur Vermeidung eines zu hohen resultierenden Gesamt-Eigengewichts Ringauflagen oder Tragroste zur Anwendung kommen können. Es wird dabei angestrebt, dass die Packungselemente den Kolonnenquerschnitt möglichst vollständig ausfüllen. Es ist jedoch unvermeidlich, dass zwischen dem Umfang der Packungselemente und der Kolonnenwand mehr oder weniger ausgeprägte Randspalten gebildet werden, was dazu führt, dass die sich bei Stoffaustauschprozessen in der Kolonne nach unten bewegende flüssige Phase teilweise an der Kolonneninnenwand nach unten abläuft und dadurch dem intensiven Stoffaustausch innerhalb der Packungselemente entzogen wird. Dieser Vorgang wird als "Randgängigkeit" bezeichnet und vermindert die gewünschte Stoffaustauschleistung der Kolonne. Die Randspalten können dabei sehr unterschiedliche Breiten von Bruchteilen von Millimetern bis hin zu mehreren Millimetern aufweisen.

Um diese Randgängigkeit möglichst zurückzudrängen, ist es bekannt, die Stoffaustauschpackungen mit sogenannten Randabweisern zu versehen. Diese können im Wesentlichen als sich nach oben erweiternde konische oder trichterförmige Ringe bezeichnet werden, die direkt bis an die Kolonneninnenwand reichen und an der Kolonneninnenwand nach unten strömende Flüssigkeitsanteile ins Innere der Packungselemente zurückleiten.Derartige Randabweiser sind aus den Schriften JP 11099329 A und US-A-5,224,351 bekannt. Um derartige Randabweiser an Stoffaustauschpackungen anzubringen, geht man derzeit in erster Linie so vor, dass man vorgeformte ringförmige Randabweiser aus PTFE oder anderen geeigneten Kunststoffen zwischen die Packungselemente einlegt. Das hat einerseits den Nachteil, dass die zwischen den einzelnen Packungselementen angeordneten Ringe an der entsprechenden Stelle den Strömungsquerschnitt zwischen den Packungselementen verringern, und dass außerdem bei der Montage der Packungselemente in der Regel Spannungen auftreten, die dazu führen, dass der bekannte ringförmige Randabweiser und damit auch dessen abgeschrägter Rand verzogen wird und nicht gleichmäßig an der Innenwand der Kolonne anliegt, sondern wellenförmig verzogen ist, wodurch die Randabdichtung mangelhaft wird und sich in den gebildeten Tälern Flüssigkeit ansammeln kann.

Es ist ferner bekannt, Randabweiser so an geordneten Packungen anzubringen, dass man eine abgeschrägte Folie aus PTFE oder einem anderen Kunststoff dadurch am Rand der Packung befestigt, dass man den senkrechten Teil der Folie mit einem um die Packung gelegten zweiten PTFE- oder Kunststoffring vernäht. Dieses Verfahren ist arbeitsaufwändig.

Es ist Aufgabe der vorliegenden Erfindung, unter Beibehaltung bzw. Verbesserung der gewünschten Stoffaustauschwirkung der Packungselemente die Anbringung von Randabweisern zu vereinfachen und deren Wirkung zu optimieren.

Diese Aufgabe wird gemäß Anspruch 1 bei einer geordneten Stoffaustauschpackung für Absorptions-, Desorptions-, Rektifikations- oder Extraktionskolonnen, die aus einzelnen Packungselementen oder aus Packungselementen, die aus Segmenten zusammengesetzt sind, aufgebaut ist und mit Randabweisern zur Vermeidung einer Randgängigkeit der Kolonne versehen ist, dadurch gelöst, dass der Randabweiser (2) als konischer Rand aus einer Kunststofffolie ausgebildet ist, der von einem auf den Umfang des Packungselements (1) oder des Segments eines Packungselements aufgelegten Folienstreifen (3) aus einer Polytetrafluorethylen-Folie gebildet wird, dessen oberer Randbereich wenigstens teilweise vom Umfang des Packungselements (1) nach außen abgebogen ist und der von einem auf den Umfang des Packungselements (1) aufgeschrumpften Schrumpffolienring (4) aus einem Tetrafluorethylen-Copolymer auf der Oberfläche des Packungselements (1) oder Segments des Packungselements gehalten wird.

Merkmale vorteilhafter Ausgestaltungen erfindungsgemäßer Randabweiser sind den Ansprüchen 2 bis 5 wiedergegeben.

Nachfolgend wird die Erfindung noch in näheren Einzelheiten erläutert, wobei zur Veranschaulichung auf zwei Figuren Bezug genommen wird.

Darin zeigen:
- Figur 1: ein Packungselements (1) mit einem Randabweiser (2), der von einem auf das Packungselement (1) aufgelegten abgewinkelten Folienstreifen (3) und einem diesen haltenden Schrumpffolienring (4) gebildet wird; und
- Figur 2: eine bevorzugte Ausführungsform eines Folienstreifens zu Verwendung in einem Randabweiser gemäß Figur 1.

Im Rahmen der vorliegenden Erfindung wird der Randabweiser von einem auf den Umfang des Packungselements oder des Segments eines Packungselements aufgelegten Folienstreifen oder Folienband gebildet, dessen oberer Randbereich nach außen abgewinkelt ist und der nach seinem Auflegen auf den Umfang des Packungselements von einem aufgeschrumpften Schrumpffolienabschnitt auf der Oberfläche des Packungselements oder Segments des Packungselements gehalten wird.

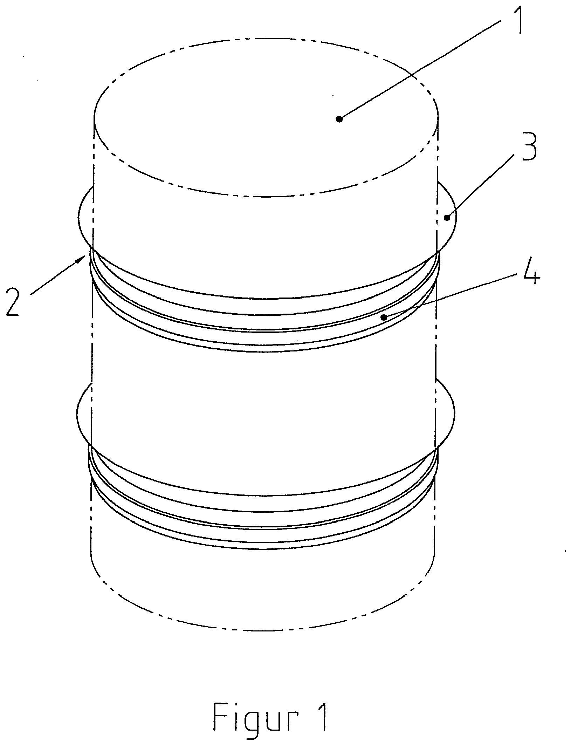

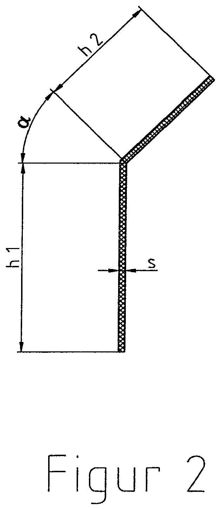

Die Erfindung wird durch die Figuren 1 und 2 näher erläutert. Dabei zeigt Figur 1 ein Packungselement 1 mit einem Randabweiser 2, der sich aus einem um das Packungselement 1 herum gelegten Folienstreifen 3 und einem aufgeschrumpften Schrumpffolienring 4 zusammensetzt.

Figur 2 zeigt einen Querschnitt eines Folienstreifens oder -bandes 3, wie es in Figur 1 zur Anwendung kommen kann.

Zur Vermeidung von Spannungen im Umfangsbereich und von durch Verziehen entstehenden Unregelmäßigkeiten sowie zur leichteren Anpassung an unterschiedliche Kolonnendurchmesser kann der den konischen Rand bildende Randbereich des Randabweisers geschlitzt sein, d.h. in etwa in radialer Richtung verlaufende Schnitte oder Kerben aufweisen.

Es versteht sich, dass die zur Herstellung der Randabweiser verwendeten Kunststoffmaterialien solche sein müssen, die unter den Bedingungen, die bei den Stoffaustauschvorgängen innerhalb der jeweiligen Kolonne herrschen, chemisch inert und ausreichend formstabil sind. Die Folien müssen mit anderen Worten aus ausreichend wärmebeständigen Kunststoffen hergestellt werden und sind aus Polytetrafluorethylen (PTFE) gebildet .

Wenn man die Randabweiser aus streifenförmigen Materialien herstellt, ist es bevorzugt, Folienstreifen oder Folienbänder mit einem in Längsrichtung verlaufenden Knick herzustellen oder ggf. auch mit einem in Längsrichtung verlaufenden Falz, der ein Abbiegen der Oberkante des Folienstreifens erleichtert, wobei im Hinblick auf die ringförmige Anordnung des Streifens zur Herstellung der Randabweiser im abzuwinkelnden Bereich Schnitte oder Kerben vorgesehen sein können. Derartige Folienstreifen oder Folienbänder lassen sich beispielsweise vorteilhaft durch Extrusion durch ein geeignetes Düsenprofil herstellen. Bei einer bevorzugten Ausführungsform ist der Folienstreifen bzw. das Folienband so in Längsrichtung geteilt, dass eine abgewinkelte Oberkante gebildet wird, die von etwa 20 bis etwa 40% der Gesamtbreite des Folienbandes bildet und so abgewinkelt ist, dass der eingeschlossene Winkel des Knicks zwischen 110 und 160°, vorzugsweise etwa 135°, beträgt. Dieser Winkel entspricht einem Winkel α der Abwinkelung des trichterartigen Rands nach außen von 20 bis 70°, vorzugsweise etwa 45°. Der "Trichter-Winkel" α tritt identisch auch an der in Figur 1 gezeigten Stelle auf. Es liegt im Rahmen der vorliegenden Erfindung, vorzusehen, dass der abgewinkelte Rand vor der Montage des Folienstreifens durch Schneiden in Längsrichtung verkürzt wird, um eine bessere Anpassung an engere oder weitere Randspalten zu erreichen.

Es ist das wesentliche Merkmal der vorliegenden Erfindung, dass die Randabweiser durch Aufschrumpfen einer schlauch- oder ringförmigen Schrumpffolie auf der Packung bzw. den Packungselementen befestigt sind. Wiederum versteht sich, dass auch für die Schrumpffolie Kunststoffmaterialien verwendet werden müssen, die unter den in der Kolonne herrschenden Bedingungen ausreichend inert sind und ihre innere Festigkeit und Formbeständigkeit nicht verlieren. Geeignete Materialien sind Tetrafluorethylen-Copolymeren, wobei ein besonders geeignetes Material ein Tetrafluorethylen-Hexafluorpropylen-Copolymer (FEP) ist. Soweit verwendete Kunststoffschläuche einer geeigneten Weite zur Verfügung stehen, können Abschnitte derartiger Kunststoffschläuche locker auf die Packungselemente aufgeschoben und dann aufgeschrumpft werden. Außer dass diese Kunststoffschläuche die Randabweiser festklemmen, halten sie gleichzeitig auch noch die Packungselemente oder Segmente von Packungselementen zusammen und stabilisieren dadurch die Packungen.

Im Falle einzelner zylinderförmiger Packungselemente wird die Schrumpffolie ringförmig auf das einzelne Packungselement aufgeschrumpft, wobei pro Packungselements vorzugsweise zwei Randabweiser vorgesehen werden, um sich ändernde Toleranzen der Kolonne bzw. des Packungslements besser auszugleichen.. Wenn die Packungselemente aus einzelnen Segmenten aufgebaut sind, ist es auch möglich, die Schrumpffolie um die einzelnen Segmente herum aufzuschrumpfen und nur diejenigen Abschnitte, die den zur Kolonneninnenwand weisenden Umgang der fertigen Packung bilden, mit Randabweisern zu versehen, indem man nur in diesem Bereich nur in diesem Bereich abgewinkelte Folienstreifen anordnet.

Steht kein Schlauch aus einer Schrumpffolie mit einem geeigneten Durchmesser zur Verfügung, kann der Schlauchring auch aus einem Endlosband aus Schrumpffolie gebildet werden, von dem ein Abschnitt zu einem Ring mit dem erforderlichen Durchmesser gelegt und dessen Enden verbunden werden, beispielsweise durch eine geeignete Schweißtechnik.

Durch das Anbringen der Randabweiser am Umfang der Packungselemente mit Hilfe von Ringen aus Schrumpfschlauch wird der freie Querschnitt der Packung nicht beeinflußt. Gleichzeitig sorgt der Schrumpfschlauch für den Zusammenhalt der Packungselemente, so dass dafür keine zusätzlichen Einrichtungen erforderlich sind. Dadurch und durch die Einfachheit der Anbringung der Randabweiser werden erhebliche Kostenvorteile erzielt. Außerdem können die band- oder streifenförmigen Randabweiser kostengünstig als Endlosband gefertigt und durch einfaches Zuschneiden an eine Vielzahl von Kolonnendurchmessern angepaßt werden.

Bei der Herstellung der Randabweiser kann man ein Verfahren anwenden, dass sich beschreiben lässt als Auflegen eines Bands aus einem abgewinkelten Folienstreifen auf den Umfang eines Packungselements sowie Aufschieben eines Schlauchabschnitts auf das Packungselement und den daran anliegenden im Wesentlichen zylindrisch Ringrand des Folienbandes sowie anschließendes Erwärmen des lockeren Verbunds unter Aufschrumpfen des Abschnitts des Folienschlauchs.

## Patentansprüche

1. Geordnete Stoffaustauschpackung für Absorptions-, Desorptions-, Rektifikations- oder Extraktionskolonnen, die aus einzelnen Packungselementen oder aus Packungselementen, die aus Segmenten zusammengesetzt sind, aufgebaut ist und mit Randabweisern zur Vermeidung einer Randgängigkeit der Kolonne versehen ist, **dadurch gekennzeichnet, dass** der Randabweiser (2) als konischer Rand aus einer Kunststofffolie ausgebildet ist, der von einem auf den Umfang des Packungselements (1) oder des Segments eines Packungselements aufgelegten Folienstreifen (3) aus einer Polytetrafluorethylen-Folie gebildet wird, dessen oberer Randbereich wenigstens teilweise vom Umfang des Packungselements (1) nach außen abgebogen ist und der von einem auf den Umfang des Packungselements (1) aufgeschrumpften Schrumpffolienring (4) aus einem Tetrafluorethylen-Copolymer auf der Oberfläche des Packungselements (1) oder Segments des Packungselements gehalten wird.

2. Geordnete Stoffaustauschpackung nach Anspruch 1, **dadurch gekennzeichnet, dass** der abgebogene obere Randbereich des Folienstreifens (3) geschlitzt ist.

3. Geordnete Stoffaustauschpackung nach einem der Ansprüche 1 oder 2, **dadurch gekennzeichnet, dass** der Folienstreifen (3) ein Streifen eines extrudierten Folienbandes mit abgewinkelter Oberkante ist.

4. Geordnete Stoffaustauschpackung nach Anspruch 3, **dadurch gekennzeichnet, dass** der eingeschlossene Winkel zwischen der abgewinkelten Oberkante und dem am Umfang des Packungselements anliegenen Teil des Folienstreifens (3) zwischen 110 und 160°, insbesondere etwa 135°, beträgt und die abgewinkelte Oberkante von 20 bis 40% der Gesamtbreite des Folienstreifens (3) bildet.

5. Geordnete Stoffaustauschpackung nach einem der vorausgehenden Ansprüche, **dadurch gekennzeichnet, dass** der Schrumpffolienring (4) aus Tetrafluorethylen-Hexafluorpropylen-Copolymer besteht.

## Claims

1. Structured packing for mass transfer columns for absorption, desorption, rectification or extraction, which is assembled of single-piece packing elements or of packing elements which are composed of single segments and which is provided with with flow restricting means to prevent peripheral fluid flow inside the column, **characterized in that** the flow restricting means (2) is configured as conical edge of a plastic film, which is formed of a polytetrafluoroethylene film strip (3) wrapped about the periphery of the packing element (1) or the segments of a packing element, the upper rim of which is bent at least in part outwards with respect to the periphery of the packing element (1) and which is held in abutment with the surface of the packing element (1) or the segment of a packing element by a ring (4) of a shrink film of a tetrafluoroethylene copolymer shrunk on the periphery of the packing element (1).

2. Structured mass transfer packing according to claim 1, **characterized in that** upper rim of the film strip (3) bent outwards is slitted.

3. Structured mass transfer packing according to claim 1 or 2, **characterized in that** the film strip (3) is a strip of an extruded film band with with the upper rim being angled.

4. Structured mass transfer packing according to claim 3, **characterized in that** the angled upper rim of the film band and the portion of the film band (3) abutting the periphery of the packing element define an angle between 110 and 160°, more specially of about 135°, and that the upper rim bent outwards forms from 20 to 40% of the total width of the film strip (3).

5. Structured mass transfer packing according to any one of the preceding claims, **characterized in that** the ring (4) of a shrink film is from tetrafluoroethylene hexafluoropropylene copolymer.

## Revendications

1. Garnissage structuré pour échange de matières destiné à des colonnes d'absorption, de désorption, de rectification ou d'extraction, qui sont constituées d'éléments de garnissage individuels ou d'éléments de garnissages qui sont composés de segments, et qui est doté de déflecteurs de bordure pour éviter un passage préférentiel au bord de la colonne, **caractérisé en ce que** le déflecteur de bordure (2) est formé comme un bord conique à partir d'une feuille de matière plastique, laquelle est constituée d'un ruban de film (3), posé sur la périphérie de l'élément de garnissage (1) ou du segment d'un élément de garnissage, provenant d'une feuille de polytétrafluoroéthylène, dont la zone de bordure supérieure est au moins partiellement recourbé vers l'extérieur depuis la périphérie de l'élément de garnissage (1), et qui est maintenu sur la surface de l'élément de garnissage (1) ou du segment de l'élément de garnissage par une bague de film rétractable (4) en copolymère de tétrafluoroéthylène qui est rétractée sur la périphérie de l'élément de garnissage (1).

2. Garnissage structuré pour échange de matières selon la revendication 1, **caractérisé en ce que** la zone de bordure supérieure recourbée du ruban de film (3) est fendue.

3. Garnissage structuré pour échange de matières selon l'une des revendications 1 ou 2, **caractérisé en ce que** le ruban de film (3) est un ruban d'une bande de film extrudée avec une arête supérieure coudée.

4. Garnissage structuré pour échange de matières selon la revendication 3, **caractérisé en ce que** l'angle inclus entre l'arête supérieure coudée et la partie du ruban de film (3) appliquée à la périphérie de l'élément de garnissage, est compris entre 110 et 160°, et s'élève en particulier à environ 135°, et l'arête supérieure coudée forme de 20 à 40 % de la largeur totale du ruban de film (3).

5. Garnissage structuré pour échange de matières selon l'une des revendications précédentes, **caractérisé en ce que** la bague de film rétractable (4) est formée en copolymère de tétrafluoroéthylène/hexafluoropropylène.
